(19) **Europäisches Patentamt / European Patent Office / Office européen des brevets**

(11) **EP 1 681 551 B1**

(12) **EUROPÄISCHE PATENTSCHRIFT**

(45) Veröffentlichungstag und Bekanntmachung des Hinweises auf die Patenterteilung:
**27.05.2020  Patentblatt 2020/22**

(51) Int Cl.:
*G01N 15/06* $^{(2006.01)}$       *B03C 3/00* $^{(2006.01)}$

(21) Anmeldenummer: **05405705.4**

(22) Anmeldetag: **19.12.2005**

(54) **Verfahren und Vorrichtung zur Messung von Anzahlkonzentration und mittlerem Durchmesser von Aerosolpartikeln**

Method and device for measuring the number concentration and average diameter of aerosol particles

Procédé et dispositif pour la mesure de la concentration en nombre et du diamètre moyen de particules d'aérosol

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **13.01.2005  EP 05405015**

(43) Veröffentlichungstag der Anmeldung:
**19.07.2006  Patentblatt 2006/29**

(60) Teilanmeldung:
**10010809.1 / 2 264 429**

(73) Patentinhaber: **Testo AG**
**79853 Lenzkirch (DE)**

(72) Erfinder:
• **Burtscher, Heinz**
  **8964 Rudolfstetten (CH)**
• **Fierz, Martin**
  **8044 Zürich (CH)**

(74) Vertreter: **Frei Patent Attorneys**
**Frei Patentanwaltsbüro AG**
**Postfach**
**8032 Zürich (CH)**

(56) Entgegenhaltungen:
**EP-A- 1 156 320     EP-A1- 1 655 595**

US-A- 4 435 681     US-A- 4 837 440

• BUKOWIECKI ET AL: "Real-time characterization of ultrafine and accumulation mode particles in ambient combustion aerosols" JOURNAL OF AEROSOL SCIENCE, Bd. 33, August 2002 (2002-08), Seiten 1139-1154, XP002324115 PERGAMON
• FIERZ M ET AL: "Real-time measurement of aerosol size distributions with an electrical diffusion battery", JOURNAL OF AEROSOL SCIENCE, ELSEVIER, AMSTERDAM, NL, vol. 33, no. 7, 1 July 2002 (2002-07-01), pages 1049-1060, XP002607590, ISSN: 0021-8502, DOI: 10.1016/S0021-8502(02)00057-5 [retrieved on 2002-03-15]
• NTZIACHRISTOS L ET AL: "Use of a corona charger for the characterisation of automotive exhaust aerosol", JOURNAL OF AEROSOL SCIENCE, ELSEVIER, AMSTERDAM, NL, vol. 35, no. 8, 1 August 2004 (2004-08-01) , pages 943-963, XP002607589, ISSN: 0021-8502, DOI: 10.1016/J.JAEROSCI.2004.02.005 [retrieved on 2004-03-24]
• BURTSCHER H: "Novel instrumentation for the characterization of ultrafine particles", JOURNAL OF AEROSOL MEDICINE, MARY ANN LIEBERT, INC., NEW YORK, US, vol. 15, no. 2, 1 June 2002 (2002-06-01), pages 149-160, XP002607591, ISSN: 0894-2684, DOI: 10.1089/089426802320282275 [retrieved on 2004-07-07]

**Beschreibung**

Die Erfindung betrifft ein Verfahren und eine Vorrichtung zur Messung der Anzahlkonzentration und/oder des mittleren Durchmessers von in einem Trägergas suspendierten Partikeln. Sie betrifft auch ein Verfahren zum Messen der Elementarkohlenstoffmenge in einem Aerosol.

In Trägergasen suspendierte Partikel (Aerosole) spielen eine wesentliche Rolle in der Atmosphäre, der Atemluft und in vielen technischen Prozessen, zum Beispiel in den Emissionen aus Verbrennungsmotoren. Die Partikel werden oft als Schwebestaub oder Schwebeteilchen bezeichnet. Eine wichtige Aufgabe besteht darin, die Konzentration der Partikel messtechnisch zu erfassen. Partikel im Grössenbereich von weniger kleiner als 10 Mikrometer Durchmesser können vom Menschen eingeatmet werden und können sich negativ auf die Gesundheit auswirken. Neuste Forschungsergebnisse zeigen, dass die üblichen Schutzmechanismen des Menschen insbesondere für Nanopartikel <100nm nicht mehr wirksam sind. Nanopartikel entstehen hauptsächlich in Verbrennungsprozessen wie Automotoren, Kohlekraftwerken, Holzheizungen etc.

Bisherige Normen und Richtlinien geben die Partikelkonzentration meist in Form der Partikelmasse pro Volumeneinheit des Aerosols, beispielsweise in Mikrogramm pro Kubikmeter oder bei Emissionen von Kraftfahrzeugen in Masse pro gefahrene Strecke oder geleistete Energie ($\mu$g/km, ($\mu$g/kWh) an. Die so angegebene Partikelbeladung erfasst praktisch nur Partikel, die grösser sind als ca. 0,1 Mikrometer, da die kleineren, die zwar in hoher Anzahlkonzentration auftreten können, massenmässig nicht ins Gewicht fallen. Messverfahren, die kleine Partikel mit entsprechender Gewichtung erfassen können, sind deshalb von aktueller Bedeutung. Im Vordergrund steht dabei eine Messung der Partikelanzahlkonzentration. Dies wird zum Beispiel auch in neuen Vorschlägen einer europäischen Expertenkommission für den Grenzwert von Emissionen von Dieselmotoren verlangt. Der interessierende Grössenbereich reicht im Fall von Dieselpartikeln von einigen Nanometern bis einige hundert Nanometer. Noch grössere Partikel haben auf die Anzahlkonzentration keinen wesentlichen Einfluss.

Heute werden zur Messung der Partikelanzahlkonzentration fast ausschliesslich Kondensationskernzähler eingesetzt (siehe zum Beispiel Aerosol Measurement, Principles, Techniques and Applications. P.A. Baron and K. Willeke, Wiley, New York, 2001). Dabei werden die Partikel in eine Umgebung mit einem übersättigten Dampf (i.a. Butanoldampf) gebracht. Der Dampf kondensiert auf den Partikeln, wodurch diese soweit wachsen, dass sie anschliessend leicht durch Messung der Lichtstreuung detektiert werden können. Das Zählen der Lichtblitze der einzelnen Partikel erlaubt eine direkte Konzentrationsbestimmung. Diese Methode ist sehr empfindlich, es können auch extrem niedrige Konzentrationen gemessen werden, sie erfordert aber insbesondere eine sehr genaue Einhaltung der Temperaturen bei der Erzeugung und Aufkondensation des übersättigten Dampfes. Das macht sie einerseits aufwendig und andererseits abhängig von den Umgebungsbedingungen.

Ist auch eine Grösseninformation erforderlich, werden hauptsächlich auf der Beweglichkeitsanalyse basierende Systeme eingesetzt, bei denen die Driftgeschwindigkeit geladener Partikel in einem elektrischen Feld gemessen wird. Am verbreitetsten ist der Scanning mobility particle sizer (SMPS, Wang, S.C. and R.C. Flagan: Scanning electrical mobility spectrometer. Aerosol Sei. Technol. 13, 1990, 230-240). Er hat eine relative gute Genauigkeit, aber eine Grössenspektrumsmessung dauert etwa 1-2 Minuten. Seit 1-2 Jahren gibt es neuartige Geräte die auf einem ähnlichen Prinzip basieren, die aber eine Zeitauflösung von ~ 0.1-1s haben (EEPS von TSI, DMS von Cambustion). Diese Geräte sind aber gross, schwer und teuer.

Ein auf der Diffusion basierendes Gerät zur Messung von Grössenverteilungen wurde kürzlich vorgestellt (EP 1 156320 A1). Hier werden die Partikel zunächst mit einem Diffusionsauflader geladen und anschliessen in mehreren Stufen von Diffusionsabscheidern nach ihrer Grösse getrennt und elektrisch gemessen. Mit diesem Messprinzip lassen sich Grössenverteilungen von Partikeln und damit auch Informationen über die Partikelzahl in jeder Grössenklasse bestimmen. Die Apparatur ist aber verhältnismässig aufwendig, und die Auswertung von Messungen ist heikel.

Ein für die Bemessung der Gesundheitsschädlichkeit ebenfalls wichtiger Parameter ist der Elementarkohlenstoffwert, d.h. die Gesamtmenge an in Partikeln vorhandenen Elementarkohlenstoffs. Dies deshalb, weil die Gesundheitsschädlichkeit der Partikel vor allem auf den - meist in Form von polyzyklischen Aromaten vorliegenden - Kohlenstoff zurückzuführen ist. Es wurde bereits vorgeschlagen, für die Messung der Anzahl von aufgeladenen Partikeln mit polyzyklischen Kohlenwasserstoffen an der Oberfläche das Prinzip der photoelektrischen Aufladung zu verwenden. Daraus ist aber die Gesamtmenge des Elementarkohlenstoffs nicht ohne Weiteres ableitbar.

Es ist Aufgabe der vorliegenden Erfindung, ein Verfahren und eine Vorrichtung zum Messen der Partikelkonzentration bzw. Partikelanzahl und/oder der mittleren Partikelgrösse zur Verfügung zu stellen, welche Nachteile bestehender Verfahren überwindet und welches insbesondere rasche Messungen mit einer vergleichsweise wenig komplexen Apparatur ermöglicht. Eine weitere Aufgabe der Erfindung ist, ein Verfahren zur Verfügung zu stellen, welches die Messung eines Elementarkohlenstoffwerts ermöglicht.

Gemäss der Erfindung werden Partikel eines Aerosols zunächst in einem Diffusionsauflader bspw. unipolar aufgeladen. Anschliessend werden sie durch einen Diffusionabscheider geleitet, in dem ein Teil der Partikel abgeschieden wird. Der abgeschiedene Strom wird gemessen und aus dem Strom wird ein Wert für die Anzahlkonzentration ermittelt.

Der in einem Diffusionsabscheider von geladenen Aerosolpartikeln erzeugte Strom wird im Folgenden "Diffusionsabscheidungsstrom" genannt.

Es ist eine Erkenntnis der Erfindung, dass der verhältnismässig einfache zu messende Diffusionsabscheidungsstrom ein Mass für die Partikelanzahlkonzentration darstellt. Dies aus folgenden Gründen

Die mittlere Ladung $\bar{q}$, welche die Partikel im Diffusionsauflader erhalten, ist proportional zum Anlagerungsquerschnitt $K$ der Partikel:

$$\bar{q} \propto K$$

wobei $K$ eine Funktion der Partikelgrösse ist.

Die Wahrscheinlichkeit, dass ein Partikel im Diffusionsabscheider abgeschieden wird, hängt von der Diffusionskonstanten $D$ der Partikel ab. Diese wiederum ist in guter Näherung umgekehrt proportional zum Anlagerungskoeffizienten $K$ (gemäss (A. Keller, M. Fierz, K. Siegmann, and H. C. Siegmann, and A. Filippov, J. Vac. Sci. Technol. A 19.1 2001, 1-8).

$$D \propto K^{-1}$$

Der Diffusionsabscheidungsstrom $I$, den die abgeschiedenen Partikel im Diffusionsabscheider bewirken, wird gemessen. Er wird durch das Produkt aus Abscheidewahrscheinlichkeit, Partikelladung und Partikelkonzentration $N$ bestimmt, das heisst:

$$I \propto D \cdot \bar{q} \cdot N \propto K \cdot K^{-1} \cdot N \propto N$$

Die beiden grössenabhängigen Faktoren kompensieren sich, der Diffusionsabscheidungsstrom hängt nur noch von der Partikelkonzentration ab und kann somit gemäss der Erfindung als Mass für die Partikelkonzentration verwendet werden.

Der Diffusionsauflader kann bspw. ein unipolarer Diffusionsauflader sein. Er kann einen elektrisch abgeschirmten Bereich mit einem Hochspannungsfeld aufweisen, in welchem Ionen erzeugt werden. Diese strömen durch Öffnungen in der elektrischen Abschirmung (diese ist bspw. als Gitter ausgebildet) in einen vom Aerosol durchströmten Bereich.

In einer besonders bevorzugten Ausführungsform der Erfindung wird ein einziger Diffusionsabscheider verwendet. Bei einem solchen sind die Oberflächen, an denen Partikel abgeschieden werden und dabei zu einem Diffusionsstrom beitragen, miteinander elektrisch verbunden. Es ist also nur ein Strommessgerät zur Erfassung des Diffusionsstroms notwendig. Als i.A. weniger bevorzugte Alternative können auch mehrere elektrisch parallel geschaltete Oberflächenbereiche (d.h. die Oberflächenbereiche sind bspw. mit je einem Elektrometer versehen, und die von diesen ermittelten Messwerte werden addiert, ggf. nach einer Eichanpassung) oder parallel (d.h. von unterschiedlichen Aerosolanteilen) durchströmte Oberflächenbereiche je mit einem Elektrometer verbunden sein. Im Gegensatz zum aus der EP 1 156 320 bekannten Stand der Technik, wo Informationen über die Anzahlkonzentration ggf. indirekt über die Grössenverteilung bestimmt werden können, ist kommt das erfindungsgemässe Verfahren aber ohne eine Mehrzahl von seriell hintereinander angeordneten Diffusionabscheidern aus. Das erfindungsgemässe Vorgehen ermöglicht daher die Verwendung einer verhältnismässig einfachen Apparatur für die Bestimmung der Anzahlkonzentration.

Der Diffusionsabscheider kann wie das an sich bekannt ist als Plattenabscheider, Gitterabscheider oder Rohrabscheider ausgebildet sein. Auch Kombinationen dieser Prinzipien sind denkbar, bspw. kann der Diffusionsabscheider eingangs eine Plattenkonstruktion und anschliessend damit elektrisch verbunden eine Gitteroder Rohranordnung aufweisen; auch andere Kombinationen sind denkbar.

Wenn bei transienten Vorgängen Partikelkonzentration und/oder Grösse stark variieren, wird auch der Strom geladener Partikel, die den Diffusionsabscheider erreichen, entsprechend schwanken. Neben dem gewünschten Strom abgeschiedener Partikel bewirken diese Schwankungen einen Influenzstrom, welcher die Messung stört. Um diesen zu kompensieren, wird zusätzlich zum Diffusionsabscheider eine Einrichtung zur Messung der Influenz verwendet. Dann wird nur der Influenzstrom gemessen. Dieser kann dann wenn nötig nach einer Korrektur der Zeitverzögerung, mit der die Partikel in den beiden Einheiten eintreffen, und Multiplikation mit einem Korrekturfaktor, der unterschiedliche Empfindlichkeiten kompensiert, vom Signal des Diffusionabscheiders subtrahiert werden. Auf diese Weise kann der Influenzstrom kompensiert werden.

Die Einrichtung zur Messung der Influenz kann dem Diffusionsabscheider in einer seriellen Anordnung vor- oder nachgeschaltet werden. Als Alternative kann sie auch parallel angeordnet werden, d.h. je ein definierter Anteil des Aerosols wird dem Diffusionsabscheider und der Influenzmesseinrichtung zugeführt.

"Parallel" ist hier und im gesamten Dokument natürlich nicht geometrisch aufzufassen sondern bezieht sich auf die Art, in welchem Verhältnis zueinander die einzelnen Einrichtungen in Bezug auf die Strömung angeordnet oder wie sie elektrisch geschaltet sind.

Die Influenzmesseinrichtung kann ähnlich aussehen wie der Diffusionsabscheider selbst, aber keine Abscheideplatten -rohre oder -gitter enthalten. Sie besitzt bspw. dieselbe geometrische Form wie der Diffusionsabscheider, wobei die Dimensionierung (bspw. die Ausdehnung in Durchflussrichtung oder die absolute Grösse) nicht identisch sein muss. Die Elektrode der Influenzmesseinrichtung kann im Wesentlichen auf Nullpotential gelegt sein bzw. dasselbe elektrische Potential aufweisen wie der Diffusionsabscheider.

Eine Influenzstrommessung der vorstehend beschriebenen Art kann auch im Zusammenhang mit anderen Messungen als der Ermittlung der Partikelanzahlkonzentration mittels Diffusionsabscheidung verwendet werden, sofern in einem transienten Prozess (also einem Prozess mit nicht-stationären Messwerten) durch Abscheidung von geladenen Aerosolpartikel an Elektroden erzeugte Ströme gemessen werden. Beispiele dafür sind Messungen der Partikelgrössenverteilung wie in EP 1 156 320 offenbart, Messungen mittels Impaktoren oder Messungen mittels differentieller Mobiltätsanalysatoren DMA. Solche Messungen beruhen darauf, dass ein Aerosol mit geladenen Partikeln eine Gas führende Anordnung durchströmt und - ggf. unter Einfluss physikalischer und/oder chemischer Einwirkungen - ein Anteil der geladenen Partikel an mit einer erste Elektrode verbundenen Abscheideflächen abgeschieden wird. Sie zeichnen sich dadurch aus, dass eine zweite Elektrode vorhanden ist, die vorzugsweise ähnlich ausgestaltet ist wie die erste Elektrode, die aber keine Abscheideflächen aufweist. Die zweite Elektrode ist der ersten Elektrode in Strömungsrichtung vor- oder nachgeschaltet, oder die Elektroden sind wie vorstehend erklärt parallel angeordnet. Dabei ist es wie in der vorstehend erwähnten Ausführungsform der Erfindung nicht notwendig, dass die zweite Elektrode auf einem spezifischen Potential ist; sie kann beispielsweise auf Nullpotential gelegt sein oder dasselbe Potential aufweisen wie die erste Elektrode.

Gemäss einer bevorzugten Ausführungsform der Erfindung werden nebst einem näherungsweisen Wert für die Partikelanzahlkonzentration auch Informationen über die Partikelgrösse ermittelt. Die mittlere Partikelladung nämlich ist in einem weiten Grössenbereich in guter Näherung proportional zu $d^x$, wobei $d$ der Partikeldurchmesser ist und der Exponent $x$ ungefähr 1.2 ist. Das heisst dass die Gesamtladungskonzentration $q_{tot}$, welche die Partikel tragen, proportional zu $Nd^x$ ist. Diese Gesamtladungskonzentration kann bestimmt werden, wenn alle Partikel in einem Filter abgeschieden werden und der Strom $I_{tot}$ gemessen wird, den sie dort verursachen.

Wird also sowohl ein Diffusionsabscheider als auch ein Filter verwendet, erhält man einen Strom $I$, der proportional zu $N$ ist und einen Strom $I_{tot}$, der proportional zu $Nd^x$ ist. Aus dem Quotient der beiden Ströme kann somit der Partikeldurchmesser $d$ bestimmt werden. Es gilt nämlich:

$$ d = c \cdot \left( \frac{I_{tot}}{I} \right)^{1/x} $$

Die Proportionalitätskonstante $c$ kann durch Kalibrierung bestimmt oder bei bekannter Vorrichtungsgeometrie näherungsweise berechnet werden. Wenn nicht nur eine Partikelgrösse, sondern eine mehr oder weniger breite Grössenverteilung vorliegt, erhält man durch die Bestimmung von $d$ einen mittleren Partikeldurchmesser. Wird der Filter zur Messung von $I_{tot}$ hinter dem Diffusionsabscheider betrieben (d.h. das Aerosol oder Anteile davon durchströmt bzw. durchströmen in einer seriellen Anordnung nacheinander den Diffusionsabscheider und das Filter), muss zum im Filter gemessenen Strom noch der im Diffusionsabscheider gemessene Diffusionsabscheidestrom $I$ addiert werden, um den Gesamtstrom $I_{tot}$ zu erhalten. Mit dieser Anordnung können Anzahlkonzentration und mittlerer Durchmesser bestimmt werden. Alternativ ist auch eine parallele Anordnung denkbar, wo je ein definierter Anteil des zu charakterisierenden Aerosols durch den Diffusionsabscheider bzw. das Filter gelenkt wird.

Wie bereits erwähnt, gelten die oben beschriebenen Beziehungen näherungsweise. Bei genauerer Betrachtung ist eine gewisse Grössenabhängigkeit vorhanden. Die Bestimmung der Grösse aus den Strömen $I$ und $I_{tot}$ erlaubt eine mindestens teilweise Kompensation dieser Grössenabhängigkeit. Neben der zusätzlichen Grösseninformation kann demnach auch die Genauigkeit der Anzahlkonzentrationsbestimmung verbessert werden, wenn $I_{tot}$ auch gemessen wird. Zum Beispiel kann eine experimentell bestimmte Grössenabhängigkeit berücksichtigt werden.

Gemäss einer besonderen Ausgestaltung der Erfindung wird der im Messverfahren gewonnene mittlere Durchmesser dazu verwendet, eine Elementarkohlenstoff-Gesamtmenge zu ermitteln. Dazu wird ein Teil des zu charakterisierenden Aerosols zusätzlich zur erfindungsgemässen Messung mit Diffusionsaufladung, Diffusionsabscheidung und Gesamtladungskonzentrationsmessung auch noch photoelektrisch aufgeladen und die photoelektrische Aufladung pro Zeiteinheit gemessen. Dies geschieht in einem parallelen Messtrang. Von einem zu charakterisierenden Aerosolstrom wird also ein Teilstrom durch einen ersten Messstrang mit Diffusionsauflader und Diffusionsabscheider - und ggf. weiteren Messgeräten, bspw. zur Messung der Influenz - geleitet, während ein anderer Teilstrom durch einen zweiten Messstrang mit photoelektrischem Auflader und Vorrichtung zur Messung der Gesamtladungskonzentration - bspw. Aerosolelektrometer - geleitet wird.

Durch die Messung im ersten Messtrang lässt sich wie vorstehend ausgeführt ein mittlerer Durchmesser bestimmen. Dieser mittlere Durchmesser kann dazu verwendet werden, aus dem Resultat der Photoemissionsmessung einen Elementarkohlenstoffwert zu bestimmen. Dies aufgrund folgender Überlegungen und Zusammenhänge:

-    Wie an sich bekannt ist, wird die Photoemissions-Aufladeeffizienz in erster Linie von der Menge des vorhandenen Kohlenstoffs bestimmt. Die Photoemissionsaufladung korreliert demnach gut mit der Elementarkohlenstoffmenge.

- Es wurde experimentell gefunden, dass der Aufladefaktor von der Partikelgrösse abhängt, wenn eine feste Kohlenstoffmenge in Partikelform dargestellt und in einem Trägergas suspendiert wird. Die Abhängigkeit von der Partikelgrösse ist monoton.

Ein Verfahren zum Bestimmen der Elementarkohlenstoff-Gesamtmenge in einem Aersosol umfasst daher die Schritte:

A. Bestimmen eines mittleren Partikeldurchmessers der im Aersosol suspendierten Partikel

B. Photoelektrisches Aufladen von Aerosolpartikeln

C. Bestimmen einer Gesamtladung der photoelektrisch aufgeladenen Aerosolpartikel

D. Ermitteln einer Elementarkohlenstoff-Gesamtmenge aus dem mittleren Partikeldurchmesser und aus der Gesamtladung.

Dabei gilt Folgendes:

- Der Verfahrensschritt A muss nicht notwendigerweise vor den Verfahrensschritten B und C stattfinden. Vielmehr wird gemäss einem besonders bevorzugten Vorgehen der Verfahrensschritt A in einem ersten und die Verfahrensschritte B und C in einem zweiten Messstrang durchgeführt, wobei von einem zu charakterisierenden Aerosolstrom ein erster Teilstrom durch den ersten und ein zweiter Teilstrom durch den zweiten Messstrang geführt wird.
- Der Verfahrensschritt A wird mit dem vorstehend beschriebenen Verfahren zur Messung der Anzahlkonzentration und/oder des mittleren Durchmessers von Partikeln durchgeführt.

Eine Relation zwischen Partikelgrösse, photoelektrischer Aufladung und Elementarkohlenstoff-Gesamtmenge kann beispielsweise ermittelt werden, indem in einem ersten Schritt eine bekannte Menge Elementarkohlenstoff in Partikelform dargestellt und in einem Trägergas suspendiert wird, worauf am dadurch gebildeten Aerosol die vorstehend genannten Verfahrensschritte A-C durchgeführt werden. Dies wird für verschiedene Partikelgrössen wiederholt. Solche Messungen können durch andere Verfahren für die Partikelcharakterisierung ergänzt werden. Die nach einer Anzahl von Messungen resultierende Funktion $M=M(PE,d)$ (M=Elementarkohlenstoff-Gesamtmenge, bspw. in μg, $PE$=Photoelektrische Aufladung, $d$=mittlerer Partikeldurchmesser), ist abhängig von der Konfiguration des photoelektrischen Aufladers. Sie kann aber durch $M=cM_{univ}$ angenähert werden, wobei $M_{univ}$ eine einmal bestimmte allgemeingültige Funktion und $c$ ein apparaturabhängiger Eichfaktor ist.

Eine erfindungsgemässe Vorrichtung weist eine Gas führende Anordnung auf, in welcher ein Aerosol den Diffusionsauflader und dann mindestens ein Teil davon den Diffusionsabscheider durchströmt. Eine eventuelle Influenzstrommesseinrichtung ist dem Diffusionsabscheider in Strömungsrichtung vor- oder nachgeschaltet, ein eventuelles Filter für die Messung der Gesamtladung ist sowohl dem Diffusionsabscheider als auch der Influenzsstrommesseinrichtung nachgeschaltet. Wie erwähnt kann alternativ zu dieser seriellen Anordnung auch eine parallele Anordnung verwendet werden, bei der das Aerosol in verschiedenen Strängen geführt wird, wovon einer den Diffusionsabscheider und mindestens ein anderer bspw. die Influenzsstrommesseinrichtung und/oder das Filter für die Gesamtstrommessung aufweist. Die Vorrichtung kann noch Fördermittel - bspw. eine Pumpe - aufweisen, mittels der der Aerosoldurchfluss bewirkt und geregelt wird. Alternativ dazu kann die Förderung auch durch externe Mittel bewirkt werden, bspw. bei einer Abgasmessung durch den vom Motor erzeugten Strömungsvortrieb.

Im Folgenden werden Ausführungsbeispiele der Erfindung anhand von Figuren genauer beschrieben. In den Figuren, welche alle schematisch sind, zeigen:

- Fig. 1 einen Diffusionsauflader einer erfindungsgemässen Vorrichtung,

- Fig. 2 einen Diffusionsabscheider einer erfindungsgemässen Vorrichtung,

- Fig. 3 eine Messanordnung zur Messung des Influenzstromes,

- Fig. 4 eine Messanordnung zur Messung des Gesamtstroms, d.h. der Gesamtladung pro Zeiteinheit,

- Fig. 5 ein Gesamtschema,

- Fig. 6 eine Messanordnung zur Messung der Gesamtkohlenstoff-Menge,

- Fig. 7 eine bevorzugte Ausführungsform der Messanordnung gemäss Fig. 7.

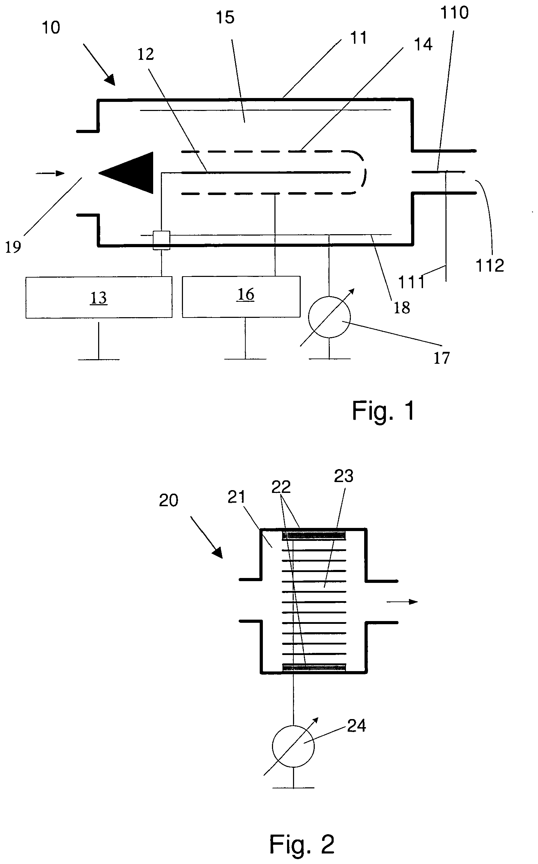

Die Aufladung kann durch Ionen erfolgen, die durch eine elektrische Koronaentladung erzeugt werden. Eine mögliche Konfiguration eines Aufladers 10 ist in **Figur 1** gezeigt. In einem zylindrischen Gehäuse 11 mit einem Aerosoleinlass 19 und einem Aerosolauslass 112 befindet sich axial angeordnet ein dünner Draht 12, an dem eine Hochspannung 13 anliegt die gross genug ist um am Draht eine stille elektrische Entladung (Korona) zu erzeugen. Eine Gitteranordnung 14 schirmt den Bereich, in welchem das Hochspannungsfeld herrscht von dem vom Aerosol durchströmte Volumen 15 elektrisch ab. Die Anzahl der durch das Gitter in den Raum 15 gelangenden Ionen kann durch eine kleine an diesem Gitter angelegte Spannung (durch eine Spannungsquelle 16) variiert und durch ein Amperemeter 17 an einer äusseren, das vom Aerosol durchströmte Volumen umgebenden Elektrode 18 auf Nullpotential gemessen werden. Durch Wahl der am Gitter anliegenden Spannung 16 kann die Effizienz der Aufladung bestimmt werden. Für die beschriebene Anwendung soll sie möglichst hoch sein, die Spannung darf aber nicht zu gross gewählt werden, sonst werden auch geladene Partikel bereits im Auflader abgeschieden. Typischerweise beträgt sie zwischen 5 Vund 30 V Am Ausgang des Aufladers werden nicht an Partikel angelagerte Ionen, welche die Messung verfälschen könnten, durch eine Ionenfalle abgeschieden. Dies kann ein Stab 110 sein, der über eine Zuführung 111 auf eine Spannung gelegt wird die hoch genug ist, um die Ionen abzuscheiden. Aufgrund der geringeren Mobilität werden aufgeladene Partikel bei geeigneter Wahl des elektrischen Potentials des Stabs nicht zu einem die Messung beeinflussenden Prozentsatz am Stab angelagert.

Der Diffusionsabscheider 20 gemäss Figur 2 kann als Plattenpaket 23 ausgebildet sein, welches über einen Isolator 22 in einem Gehäuse 21 isoliert montiert ist (Plattenabscheider). Mit einem Amperemeter 24 kann der Strom, den auf den Platten abgeschiedene geladene Partikel verursachen gemessen werden. Anstelle des Plattenpaketes sind verschiedene andere Lösungsvarianten möglich. Der Diffusionsabscheider kann zum Beispiel auch als Rohrpaket (Rohrabscheider) oder als Wabenstruktur ausgeführt sein. Auch Anordnungen aus einem oder mehreren Gittern (Gitterabscheider) können eingesetzt werden. In der Literatur sind vielfältige Ausführungen von Diffusionsabscheidern zu finden.

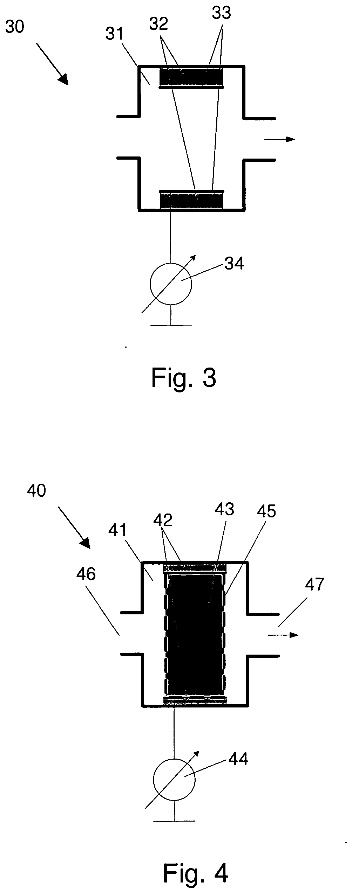

Eine Anordnung zur Messung des Influenzstromes 30 zeigt **Figur 3.** In einem dichten, elektrisch leitenden Gehäuse 31 durchströmt das Aerosol eine isoliert (Isolator 32) montierte Elektrode 33, welche mit einem Amperemeter 34 verbunden ist. Die Anordnung zur Messung des Influenzstroms hat bspw. die im wesentlichen zum Diffusionsabscheider identische zylindrische (oder auch nicht-zylindrische) Form und bspw. auch dieselben Abmessungen, wobei natürlich die Abscheideflächen (Platten, Rohre, Waben, Gitter etc.) fehlen. In einer solchen Konfiguration ist die Menge der an der Elektrode 33 abgeschiedenen Partikel klein im Vergleich zum Influenzstrom, der in dieser aufgrund von Änderungen der Gesamtpartikelladung bei transienten Vorgängen bewirkt wird.

Die Durchführung der Gesamtladungsmessung erfolgt auf an sich bekannte Weise nach dem Prinzip des Aerosolelektrometers. Hier werden die Partikel in einem elektrisch isoliert montierten Filter gesammelt und der dort entstehende Strom wird gemessen, wie dies bei den weiter oben erwähnten Sensoren auch bereits gemacht wird. Ein Beispiel eines Aerosolelektrometers 40 zeigt **Figur 4.** In einem dichten, elektrisch leitenden Gehäuse 41 mit einem Aerosoleinlass 46 und einem Auslass 47 werden die Aerosolpartikel in einem Filter 43 aufgefangen. Der Filter ist entweder selbst elektrisch leitend oder in einem leitenden, und für die Strömung durchlässigen Gehäuse 45 (Faraday Käfig) eingebaut. Er wird isoliert (Isolator 42) montiert und mit einem Amperemeter 44 verbunden. Der gemessene Strom entspricht der Gesamtladung pro Zeiteinheit.

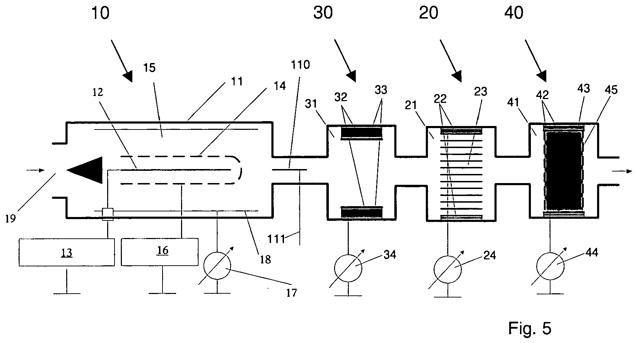

Eine mögliche Kombination der Teilsysteme in den Figuren 1 - 4 ist in **Figur 5** gezeigt, wobei die in den Figuren 1 bis 4 verwendeten Bezugszeichen in Figur 5 entsprechende Elemente bezeichnen. Anschliessend an den Diffusionsauflader 10 sind in Strömungsrichtung der Reihe nach die Einrichtung zum Messen des Influenzstroms 30, der Diffusionsabscheider 20 und das Aerosolelektrometer 40 angeordnet. Andere Anordnungen sind wie bereits erwähnt ebenfalls denkbar.

Nebst der hier beschriebenen Ausführungsform sind noch viele weitere Arten denkbar, wie die Erfindung realisiert werden kann. Beispielsweise kann der Diffusionauflader in einer anderen als der beschriebenen Ausführung vorliegen; der Stand der Technik beinhaltet bspw. viele Möglichkeiten, einen Diffusionsauflader zu realisieren. Die Elektrode für die Influenzkorrektur muss nicht im Wesentlichen dieselbe Form aufweisen wie der Diffusionsabscheider sondern kann irgendeine Form haben, die keine nennenswerte Abscheidung mit sich bringt. Beispielsweise kann sie die Form eines dem Diffusionabscheider vorgelagerten groben Gitters haben, das im Extremfall lediglich aus zwei Stäben besteht.

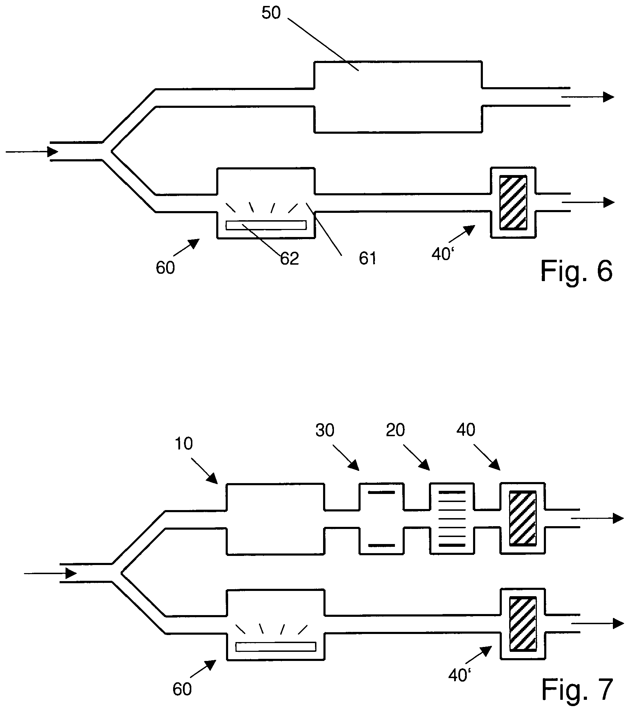

In Figur 6 ist eine Messanordnung gezeichnet, die die Bestimmung der Elementarkohlenstoff-Gesamtmenge erlaubt. Gemäss der Anordnung wird zwei Messsträngen je ein Teilstrom des zu charakterisierenden Aerosolstroms zugeführt. Im ersten Messtrom wird das Aerosol durch eine Vorrichtung zur Messung einer mittleren Partikelgrösse 50 charakterisiert. Die mittlere Partikelgrösse wird als mittlerer Partikeldurchmesser wiedergegeben. In einem zweiten Messstrang werden Partikel durch einen photoelektrischen Auflader 60 elektrisch geladen und anschliessend ihre Gesamtladung pro Zeiteinheit in einem Aerosolelektrometer 40' gemessen. Der photoelektrische Auflader besitzt eine in einer Aufladekammer 61 angeordnete UV-Lichtquelle 62. Die in der Vorrichtung 50 bestimmte mittlere Partikelgrösse und die vom Aerosolelektrometer 40' gemessene Gesamtladung werden von einer (nicht gezeichneten) Auswerteeinheit dafür verwendet, einen Wert für die Elementarkohlenstoff-Gesamtmenge zu bestimmen.

In **Figur 7** ist noch eine Ausführungsform der Messanordnung gemäss Figur 6 dargestellt, in welcher die Vorrichtung zur Messung der mittleren Partikelgrösse 50 gemäss Figur 5 ausgebildet ist. Diese Kombination ist besonders bevorzugt.

**Patentansprüche**

1.   Verfahren zur Messung der Anzahlkonzentration von Partikeln in einem Aerosol, wobei das Aerosol mittels Diffusionsaufladung elektrisch aufgeladen wird und anschliessend mindestens ein Anteil davon einen Diffusionsabscheider (20) durchströmt, wobei ein im Diffusionsabscheider durch Anlagerung von geladenen Partikeln des Aerosols erzeugter Diffusionsabscheidungsstrom gemessen wird, wobei ausserdem ein Gesamtstrom gemessen wird, den die Partikel verursachen, die in einem Filter zum Abscheiden aller Partikel abgeschieden werden, **dadurch gekennzeichnet dass** aus lediglich dem einen Diffusionsabscheidungsstrom ein Wert für die Anzahlkonzentration ermittelt wird, und wobei ein im Diffusionsabscheider (20) auftretender Influenzstrom kompensiert wird, indem ein Influenzstrom in einer zusätzlichen Elektrode (33) gemessen wird und dieser Messwert mit demjenigen des Diffusionsabscheiders (20) verrechnet wird.

2. Verfahren nach Anspruch 1, **dadurch gekennzeichnet, dass** das Aufladen des Aerosols mittels eines unipolaren Diffusionsaufladers (10) geschieht.

3. Verfahren nach einem der vorangehenden Ansprüche, **dadurch gekennzeichnet, dass** ein einziger Diffusionsabscheider (20) verwendet wird.

4. Verfahren nach einem der vorangehenden Ansprüche, bei dem der Diffusionsabscheider (20) als Plattenabscheider, als Gitterabscheider, als Rohrabscheider oder als Kombination aus einem Plattenabscheider, Gitterabscheider und/oder Rohrabscheider ausgeführt ist

5. Verfahren nach einem der vorangehenden Ansprüche, **dadurch gekennzeichnet, dass** die geometrische Form der zusätzlichen Elektrode der geometrischen Form des Diffusionsabscheiders ohne Abscheideflächen entspricht.

6. Verfahren nach einem der vorangehenden Ansprüche, **dadurch gekennzeichnet, dass** der Diffusionsabscheider (20) und die zusätzliche Elektrode (33) in einer seriellen Anordnung vorliegen und nacheinander durchströmt werden.

7. Verfahren nach einem der vorangehenden Ansprüche, **dadurch gekennzeichnet, dass** aus dem Gesamtstrom und dem Diffusionsabscheidungsstrom der mittlere Durchmesser der Partikel ermittelt wird.

8. Verfahren nach Anspruch 7, **dadurch gekennzeichnet, dass** in einem separaten Messstrang zusätzlich Partikel des Aerosols photoelektrisch aufgeladen werden, die photoelektrische Ladung bestimmt und aus dieser und dem mittleren Partikeldurchmesser eine Elementarkohlenstoff-Gesamtmenge errechnet wird.

9. Verfahren nach einem der vorangehenden Ansprüche, **dadurch gekennzeichnet, dass** die Anzahlkonzentration bestimmt wird, indem der Diffusionsabscheidungsstrom mit einem Eichfaktor multipliziert und ggf. mittels aus den Messungen des Influenzstroms und/oder des Gesamtstroms gewonnenen Korrekturwerten korrigiert wird.

10. Vorrichtung zur Messung der Anzahlkonzentration und/oder des mittleren Durchmessers von Partikeln eines Aerosols, aufweisend eine Gas führende Anordnung, in welcher eine Durchströmrichtung definiert ist, einen Diffusionsauflader (10) und einen Diffusionsabscheider (20), welche so angeordnet sind, dass in der Durchströmrichtung durchströmendes Aerosol zuerst den Diffusionsauflader und anschliessend mindestens ein Anteil davon den Diffusionsabscheider durchströmt, eine Strommess-Einrichtung zum Bestimmen eines im Diffusionsabscheider durch Anlagerung von geladenen Partikeln des Aerosols erzeugten Diffusionsabscheidungsstroms, ein Aerosolelektrometer (40) zum Messen eines Gesamtstroms, **gekennzeichnet durch** Auswertemittel zum Ermitteln einer Anzahlkonzentration aus lediglich dem einen Diffusionsabscheidungsstrom sowie eine vom Diffusionsabscheider räumlich getrennte zusätzliche Elektrode (33) und eine zusätzliche Strommess-Einrichtung zum Messen des in der zusätzlichen Elektrode erzeugten Influenzsstroms.

11. Vorrichtung nach Anspruch 10, **dadurch gekennzeichnet, dass** die genannte Gas führende Anordnung einen ersten Messstrang bildet, dass ein zum ersten Messstrang parallel geschalteter zweiter Messstrang vorhanden ist, welcher einen photoelektrischen Auflader (60) und eine Vorrichtung zum Ermitteln der Gesamtladung (40') aufweist, und dass ferner eine Auswerteeinrichtung vorhanden ist, in welcher Mittel zum Berechnen einer Elementarkohlenstoff-Gesamtmenge aus einer mittleren Partikelgrösse und der photoelektrischen Aufladung ausgebildet sind.

**Claims**

1. A method for measuring the number concentration of particles in an aerosol, wherein the aerosol is electrically charged by way of diffusion charging and at least a share thereof subsequently flows through a diffusional precipitator (20),
wherein a diffusional precipitation current which is produced in the diffusional precipitator by way of the accumulation of charged particles of the aerosol is measured, wherein furthermore a total current which the particles which are precipitated in a filter for precipitating all particles produce is also measured,

characterised in that a value for the number concentration is determined from only the one diffusional precipitation current, and wherein an influence current which occurs in the diffusional precipitator (20) is compensated by way of an influence current being measured in an additional electrode (33) and this measured value being offset against that of the diffusional precipitator (20).

2. A method according to claim 1, **characterised in that** the charging of the aerosol is effected by way of a unipolar diffusion charger (10).

3. A method according to one of the preceding claims, **characterised in that** a single diffusional precipitator (20) is used.

4. A method according to one of the preceding claims, **characterised in that** the diffusional precipitator (20) is designed as a plate precipitator, as a grid precipitator, as a tube precipitator or as a combination of a plate precipitator, grid precipitator and/or tube precipitator.

5. A method according to one of the preceding claims, **characterised in that** the geometric shape of the additional electrode corresponds to the geometric shape of the diffusional precipitator without precipitation surfaces.

6. A method according to one of the preceding claims, **characterised in that** the diffusional precipitator (20) and the additional electrode (33) are present in a series arrangement and are successively subjected to throughflow.

7. A method according to one of the preceding claims, **characterised in that** the average diameter of the particles is determined from the total current and the diffusional precipitation current.

8. A method according to claim 7, **characterised in that** in a separate measuring line, additionally particles of the aerosol are photoelectrically charged, the photoelectric charging is determined and an elementary carbon total quantity is computed from this and from the average particle diameter.

9. A method according to one of the preceding claims, **characterised in that** the number concentration is determined by way of the diffusional precipitation current being multiplied by a calibration factor and possibly by way of correction values which are obtained from the measurements of the influence current and/or the total current.

10. A device for measuring the number concentration and/or the average diameter of particles of an aerosol, comprising a gas-leading arrangement, in which a throughflow direction is defined, a diffusion charger (10) and a diffusional precipitator (20) which are arranged such that aerosol which flows through in the throughflow direction firstly flows through the diffusion charger and subsequently at least a share thereof flows through the diffusional precipitator, a current measuring device for determining a diffusional precipitation current which is produced in the diffusional precipitator by way of the accumulation of charged particles of the aerosol, an aerosol electrometer (40) for measuring a total current, **characterised by** evaluation means for determining a number concentration from only the one diffusional precipitation current, as well as an additional electrode (33) which is spatially separated from the diffusional precipitator, and an additional current measuring device for measuring the influence current which is produced in the additional electrode.

11. A device according to claim 10, **characterised in that** the mentioned gas-leading arrangement forms a first measuring line, that a second measuring line which is connected parallel to the first measuring line is present and comprises a photoelectric charger (60) and a device for determining the total charging (40') and that further an evaluation device is present, in which means for computing an elementary carbon total quantity from an average particle size and the photoelectric charging are formed.

## Revendications

1. Procédé de mesure de la concentration en nombre de particules dans un aérosol, l'aérosol étant chargé électriquement par diffusion, au moins une partie en traversant ensuite un séparateur (20) à diffusion, le courant de dépôt de diffusion formé dans le séparateur à diffusion par les particules chargées de l'aérosol qui s'y déposent étant mesuré, le courant total provoqué par les particules qui se déposent dans un filtre recueillant toutes les particules étant en outre mesuré,
**caractérisé en ce que**
la valeur de la concentration en nombre est déterminée à partir du courant de dépôt de diffusion uniquement et
**en ce que** le courant d'influence qui survient dans le séparateur (20) à diffusion est compensé en mesurant le courant d'influence dans une électrode supplémentaire (33) et en comparant cette valeur de mesure à celle du séparateur (20) à diffusion.

2. Procédé selon la revendication 1, **caractérisé en ce que** l'aérosol est chargé au moyen d'un chargeur (10) à diffusion unipolaire.

**3.** Procédé selon l'une des revendications précédentes, **caractérisé en ce qu'**il utilise un seul séparateur (20) à diffusion.

**4.** Procédé selon l'une des revendications précédentes, dans lequel le séparateur (20) à diffusion est configuré comme séparateur à plaques, séparateur à grille, séparateur tubulaire ou comme combinaison d'un séparateur à plaques, d'un séparateur à grille et/ou d'un séparateur tubulaire.

**5.** Procédé selon l'une des revendications précédentes, **caractérisé en ce que** la forme géométrique de l'électrode supplémentaire correspond à la forme géométrique du séparateur à diffusion sans surfaces de dépôt.

**6.** Procédé selon l'une des revendications précédentes, **caractérisé en ce que** le séparateur (20) à diffusion et l'électrode supplémentaire (33) sont placés en série et traversés l'une après l'autre.

**7.** Procédé selon l'une des revendications précédentes, **caractérisé en ce que** le diamètre moyen des particules est déterminé à partir du courant total et du courant de dépôt de diffusion.

**8.** Procédé selon la revendication 7, **caractérisé en ce que** des particules supplémentaires de l'aérosol sont chargées photoélectriquement dans un parcours de mesure séparé, **en ce que** la charge photoélectrique est déterminée et **en ce qu'**une quantité totale de carbone élémentaire est calculée à partir de cette dernière et du diamètre moyen des particules.

**9.** Procédé selon l'une des revendications précédentes, **caractérisé en ce que** la concentration en nombre est déterminée en multipliant le courant de dépôt de diffusion par un facteur d'étalonnage et est éventuellement corrigée à partir des valeurs de correction obtenues sur la base des mesures du courant d'influence et/ou du courant total.

**10.** Ensemble de mesure de la concentration en nombre et/ou du diamètre moyen des particules d'un aérosol, comprenant
un ensemble conduisant à un gaz dans lequel est définie une direction de traversée,
un chargeur (10) à diffusion et un séparateur (20) à diffusion disposés de telle sorte que l'aérosol se déplaçant dans la direction de traversée traverse d'abord le chargeur à diffusion et qu'ensuite au moins une partie de l'aérosol traverse le séparateur à diffusion,
un dispositif de mesure de courant qui détermine le courant de dépôt de diffusion produit dans le séparateur à diffusion par le dépôt des particules chargées de l'aérosol et
un électromètre (40) d'aérosol qui mesure un courant total,
**caractérisé par**
des moyens d'évaluation qui déterminent une concentration en nombre uniquement à partir du courant de dépôt de diffusion,
une électrode supplémentaire (33) séparée spatialement du séparateur à diffusion et
un dispositif supplémentaire de mesure de courant qui mesure le courant d'influence produit dans l'électrode supplémentaire.

**11.** Ensemble selon la revendication 10, **caractérisé en ce que** ledit agencement conduisant un gaz forme un premier parcours de mesure, **en ce qu'**un deuxième parcours de mesure raccordé en parallèle au premier parcours de mesure est prévu et présente un chargeur photoélectrique (60) et un ensemble de détermination de la charge totale (40') et **en ce qu'**en outre un dispositif d'évaluation est prévu dans lequel sont prévus des moyens de calcul de la quantité totale de carbone élémentaire ou de la taille moyenne des particules, ainsi que de la charge photoélectrique.

Fig. 1

Fig. 2

30

31  32  33

34

Fig. 3

40

41  42  43  45

46  47

44

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1156320 A1

- EP 1156320 A

**In der Beschreibung aufgeführte Nicht-Patentliteratur**

- **P.A. BARON ; K. WILLEKE.** Beispiel Aerosol Measurement, Principles, Techniques and Applications. Wiley, 2001
- **WANG, S.C. ; R.C. FLAGAN.** Scanning electrical mobility spectrometer. *Aerosol Sei. Technol.,* 1990, vol. 13, 230-240

- **A. KELLER ; M. FIERZ ; K. SIEGMANN ; H. C. SIEGMANN ; A. FILIPPOV.** *J. Vac. Sci. Technol. A,* 2001, vol. 19.1, 1-8